# DEMANDE DE BREVET EUROPEEN

(11) **EP 4 016 816 A1**
(43) Date de publication de la demande: **22.06.2022**
(21) Numéro de dépôt: 21212922.5
(22) Date de dépôt: 07.12.2021
(51) Int. Cl.: H02K 11/33, H02K 9/06, H02K 5/18

(54) **ENSEMBLE COMPORTANT UNE MACHINE ÉLECTRIQUE, UN ONDULEUR ET UN INTERCONNECTEUR**

(30) Priorité: 18.12.2020 FR 2013611
(71) Demandeur: VALEO EQUIPEMENTS ELECTRIQUES MOTEUR, 94046 Créteil Cedex (FR)
(72) Inventeur: EL BARAKA, Khadija, 94046 Créteil Cedex (FR); CANITROT, Didier, 94046 Créteil Cedex (FR); JUGOVIC, Svetislav, 94046 Créteil Cedex (FR)
(74) Mandataire: Valeo Powertrain Systems

(57) **Abrégé**

L'invention concerne un ensemble (1) comprenant :
- une machine électrique tournante (10)
- un onduleur (30) relié électriquement à la machine électrique tournante (10) comportant :
▪ une pluralité de modules de puissance (31), chaque module de puissance (31) comprenant une première et une deuxième paroi latérale (32, 33),
▪ un dissipateur thermique (40) comportant des ailettes (41) disposé sur chacune desdites parois latérales (32, 33), et
▪ un module électronique de contrôle (50) de la pluralité de modules de puissance (31),

- un interconnecteur (20) comportant une première face (21) sur laquelle est fixé perpendiculairement par rapport à cette dernière la pluralité de modules de puissance (31)
dans lequel les modules de puissance (31) sont tous concentrés sur une portion angulaire (a) de l'interconnecteur (20), ladite portion prédéfinie (a) étant inférieure à 360°.

## Description

La présente invention porte sur un ensemble, notamment pour véhicule hybride comportant une machine électrique tournante et un onduleur entre lesquels est interposé un interconnecteur pour connecter électriquement les deux pièces.

L'invention trouve des applications dans le domaine des machines électriques tournantes pour véhicule hybride, notamment automobiles et, en particulier, dans le domaine des machines électriques réversibles de forte puissance pouvant fonctionner en mode alternateur et en mode moteur accouplées avec une boîte de vitesses.

De façon connue en soi, les machines électriques tournantes comportent un stator et rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Dans certains types de chaînes de traction de véhicule automobile, une machine électrique tournante réversible de forte puissance est accouplée à la boîte de vitesses du véhicule ou à un train du véhicule automobile. La machine électrique est alors apte à fonctionner dans un mode alternateur pour fournir notamment de l'énergie à la batterie et/ou au réseau de bord du véhicule, et dans un mode moteur, non seulement pour assurer le démarrage du moteur thermique, mais également pour participer à la traction du véhicule seule ou en combinaison avec le moteur thermique.

Le stator est monté dans un carter configuré pour porter à rotation l'arbre par exemple par l'intermédiaire de roulements. Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électrique de commande et/ou de puissance.

Le module électronique de commande contrôle et de puissance, tel qu'un onduleur, permet d'alimenter le bobinage selon un système de courant polyphasé, par exemple triphasé ou double-triphasé. Un interconnecteur fait la connexion entre l'onduleur et la machine électrique, en particulier les phases du stator afin d'assurer une connexion électrique entre un signal entrant/sortant de la machine électrique et un signal entrant/sortant de l'onduleur.

Une telle solution est par exemple divulguée dans la demande US10164504. Dans cet exemple, les modules de puissances sont disposés sur toute la circonférence de l'interconnecteur, ce qui laisse peu de place au module de contrôle et ne permet pas d'obtenir un ensemble compact.

L'invention vise ainsi à proposer un ensemble comprenant une machine électrique tournante, un onduleur et un interconnecteur compact.

La présente invention vise à remédier efficacement à ces inconvénients en proposant un ensemble notamment pour véhicule hybride, comprenant :
- une machine électrique tournante comportant :
   ▪ des moyens générateurs d'un flux forcé d'un fluide de refroidissement s'écoulant dans la direction axiale de la machine,
   ▪ un rotor centré et fixé sur un arbre de rotation s'étendant suivant un axe X,
   ▪ un stator entourant le rotor et muni d'un corps et d'au moins un bobinage comportant une pluralité d'entrées/sorties de phase et
   ▪ un palier arrière monté à une extrémité du rotor et recevant l'arbre,
- un onduleur relié électriquement à la machine électrique tournante et comportant :
   ▪ une pluralité de modules de puissance, chaque module de puissance comprenant une paroi avec une première et une deuxième face,
   ▪ un dissipateur thermique comportant des ailettes associé à chacune desdites parois latérales, et
   ▪ un module électronique de contrôle de la pluralité de modules de puissance,
- un interconnecteur configuré pour relier les phases du bobinage du stator à la pluralité de modules de puissance et pour relier ces derniers au module électronique de contrôle, l'interconnecteur comportant d'une part une première face sur laquelle est fixé perpendiculairement par rapport à cette dernière la pluralité de modules de puissance et d'autre part une seconde face, opposée à ladite première face et orientée vers le palier arrière,
dans lequel les modules de puissance sont tous concentrés sur une portion angulaire α de l'interconnecteur, ladite portion prédéfinie α étant inférieure à 360°, de préférence inférieure à 220°.

L'invention permet ainsi d'obtenir un ensemble compact qui libère de la place pour les autres composants de l'ensemble.

Dans la description et les revendications, on utilisera les termes "externe" et "interne" ainsi que les orientations "axiale" et "radiale" pour désigner, selon les définitions données dans la description, des éléments du rotor, du stator et/ou de la machine électrique. Par convention, l'orientation "radiale" est dirigée orthogonalement à l'orientation axiale. L'orientation axiale se rapporte, suivant le contexte, à l'axe de rotation du rotor, du stator et/ou de la machine électrique. L'orientation "circonférentielle" est dirigée orthogonalement à la direction axiale et orthogonalement à la direction radiale. Les termes "externe" et "interne" sont utilisés pour définir la position relative d'un élément par rapport à un autre, par rapport à l'axe de référence, un élément proche de l'axe est ainsi qualifié d'interne par opposition à un élément externe situé radialement en périphérie.

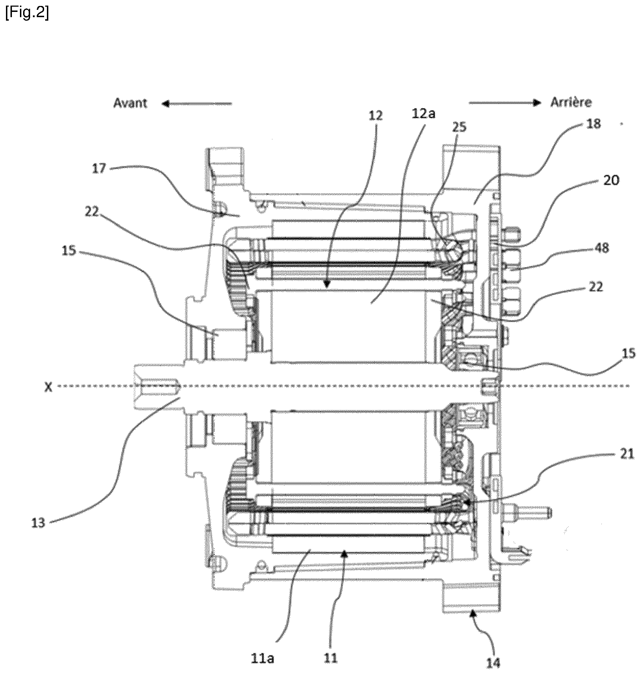

Dans la suite de la description, l'orientation d'avant en arrière de la machine électrique correspond à une orientation allant de gauche à droite sur la figure 2. Ainsi, on entend par un élément "avant", un élément situé du côté de l'extrémité cannelée de l'arbre de la machine et par élément "arrière" un élément situé du côté opposé, c'est-à-dire du côté de l'interconnecteur ou de l'onduleur.

Selon un aspect de l'invention, la première face de l'interconnecteur présente une portion angulaire préfinie β apte à recevoir ledit module électronique de contrôle, ladite portion angulaire β étant égale à 360°- α.

Selon un aspect de l'invention, la pluralité de modules de puissance est répartie en au moins deux groupes, chaque groupe étant fixé sur la première face de l'interconnecteur indépendamment des autres groupes. Ainsi, lorsque la machine électrique ne fonctionne pas en raison par exemple d'un module de puissance, il suffit de démonter le groupe dans lequel dans lequel le module de puissance qui ne fonctionne pas se trouve pour le mettre au rebut et de le remplacer par un nouveau module de puissance. Il n'est ainsi pas nécessaire de mettre au rebut toute la machine électrique ou tous les modules de puissance lorsque ceux-ci sont fixés ensemble sur l'interconnecteur, la maintenance se trouve donc facilitée.

Avantageusement, un groupe peut comprendre un seul module de puissance, dans ce cas-là, il y aura autant de groupes que de modules de puissance.

Selon un aspect de l'invention, chaque module de puissance comprend une première extrémité qui fait face à la première face de l'interconnecteur sur laquelle il est fixé et une deuxième extrémité opposée à ladite première extrémité, ladite deuxième extrémité étant exempte de toute connexion.

De préférence, chaque module de puissance comprend une pluralité d'interrupteurs électroniques de puissance montés sur des traces de puissance.

Selon un aspect de l'invention, la pluralité de modules de puissance est fixée sur la première face de l'interconnecteur par l'intermédiaire de moyens de fixations qui servent également à la connexion électrique entre les modules de puissance et l'interconnecteur.

Selon un aspect de l'invention, l'interconnecteur comprend des traces B+ et B- surmoulées. De préférence, la pluralité de modules de puissance est connectée aux traces B+ et/ou B-par la première face de l'interconnecteur.

Selon un aspect de l'invention, les ailettes forment des canaux orientés axialement dans lesquels passe le flux de fluide de refroidissement axial de manière à bien refroidir le module de puissance sur toute son étendue axiale.

Le dissipateur thermique est de préférence constitué d'un métal à haute conductivité tel que l'aluminium.

Selon un aspect de l'invention, l'interconnecteur comprend des ouvertures qui s'étendent perpendiculairement à l'axe de rotation pour le passage du flux de fluide de refroidissement axial.

Selon un aspect de l'invention, le palier arrière comprend des ouvertures qui s'étendent perpendiculairement à l'axe de rotation pour le passage du flux de fluide de refroidissement axial, lesdites ouvertures étant sensiblement alignées avec les ouvertures de l'interconnecteur.

De préférence, le palier arrière comprend des ouies radiales de sortie du fluide de refroidissement. En variante, la palier arrière peut être exempt d'ouies radiales de sortie de fluide, dans ce cas l'écoulement du flux de refroidissement se fait par conduction (par exemple machine fermée équipée d'un circuit d'eau).

Selon un aspect de l'invention, le module de puissance comprend deux pièces en aluminium disposées de part et d'autre de ses parois latérales, en particulier sur les parois latérales des dissipateurs thermiques. Ces pièces en aluminium permettent d'améliorer la thermique et rigidifier la structure du module de puissance sur lequel ils sont installés.

Selon un aspect de l'invention, le bobinage peut être de type double triphasé.

Selon un aspect de l'invention, l'onduleur est décalé axialement de la machine électrique. La machine électrique et l'onduleur se succèdent axialement.

Avantageusement, le rotor comporte un corps formé par un empilage de feuilles de tôles maintenues sous forme de paquet au moyen d'un système de fixation adapté. Le rotor comporte des pôles formés par uniquement par des aimants permanents logés dans des cavités ménagées dans la masse magnétique du rotor. De telle manière, le flux magnétique est créé uniquement par les aimants permanents et le rotor n'est pas excité extérieurement.

L'invention sera mieux comprise à la lecture de la description qui suit et à l'examen des figures qui l'accompagnent. Ces figures ne sont données qu'à titre illustratif mais nullement limitatif de l'invention.
[Fig. 1] représente une vue en perspective d'un ensemble selon un premier mode de réalisation de la présente invention.
[Fig. 2] représente une vue en coupe longitudinale d'un exemple de machine électrique tournante pouvant être utilisé dans l'ensemble de la figure 1.
[Fig. 3] représente une vue éclatée de l'ensemble de la figure 1.
[Fig. 4] représente une vue de dessus de la partie arrière de l'ensemble de la figure 3.
[Fig. 5] représente une vue en perspective d'une partie du module de puissance visible sur la figure 3.
[Fig. 6] représente une vue en perspective du module de puissance visible sur la figure 3.
[Fig. 7] représente une vue de dessous du module de puissance visible sur la figure 3.

Les éléments identiques, similaires ou analogues conservent la même référence d'une figure à l'autre.

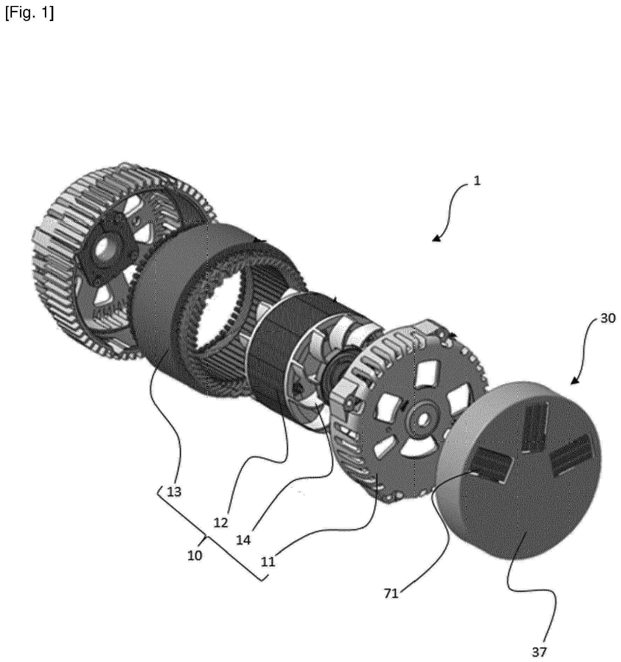

La figure 1 représente un ensemble 1 qui pourra être intégrée à une architecture de traction de véhicule automobile, notamment un véhicule de faible puissance ou véhicule hybride. L'ensemble 1 visible sur la figure 1 comporte une machine électrique tournante 10 et un onduleur 30 relié électriquement à la machine électrique 10. Avantageusement, l'onduleur 30 est disposé sur une face d'extrémité arrière de la machine électrique tournante 10.

La figure 2 représente plus en détails un exemple de machine électrique tournante 10 qui peut être utilisée dans l'ensemble 1. La machine électrique 10 comporte un stator 11 polyphasé entourant un rotor 12 d'axe X monté sur un arbre 13. Le stator 11 de la machine 10 entoure le rotor 12 avec présence d'un entrefer entre la périphérie interne du stator 13 et la périphérie externe du rotor 12. Le stator 13 est porté par un carter 14 muni d'un palier avant 17 et d'un palier arrière 18. Les paliers 17 et 18 comportent chacun un roulement 15 afin d'assurer un montage en rotation de l'arbre 13 par rapport au carter 14 de la machine électrique 10. De préférence, les paliers 17, 18 sont réalisés en acier ou aluminium.

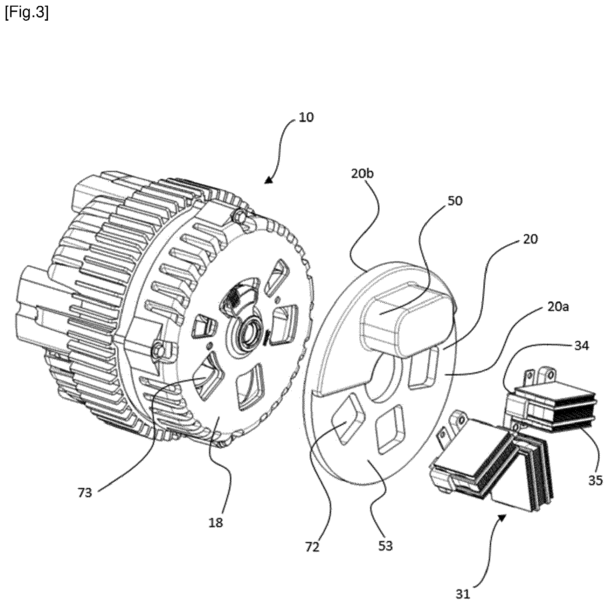

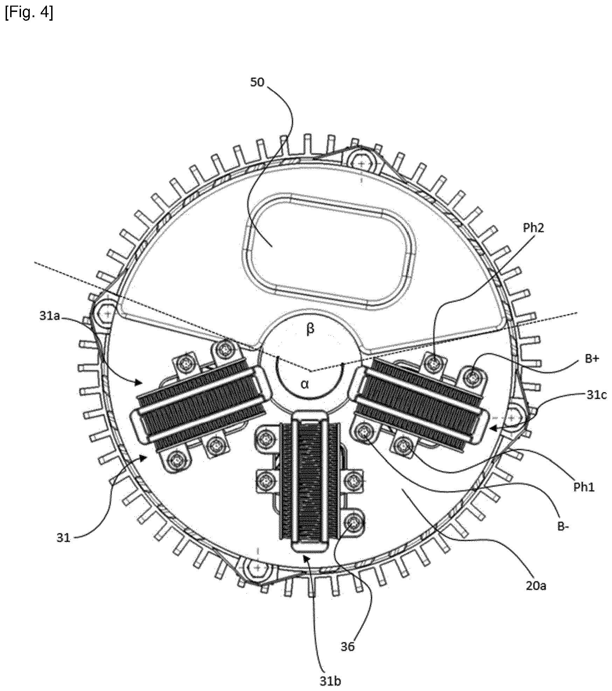

L'assemblage de la machine électrique 10 s'effectue par l'arrière au moyen de tirants de fixations permettant le maintien de l'ensemble des paliers 17 et 18, du stator 11, et du rotor 12. On utilise de préférence quatre tirants espacés deux à deux d'un angle de 90 degrés plus ou moins 10 degrés, tel que montré sur les figures 3 et 4. Un des paliers 17 ou 18 pourra également comporter des oreilles de fixation à un élément d'une boîte de vitesses ou à un autre élément du véhicule automobile.

L'ensemble rotor 12 - paliers 17 et 18 - tirants de fixation est monté d'un même côté de la machine électrique 10 (de l'arrière vers l'avant). On peut ainsi mettre en œuvre un procédé de montage simplifié, standard, et automatisé.

L'arbre 13 est équipé de cannelures droites, hélicoïdales ou lisses avec serrage pour réaliser l'accouplement avec une boîte de vitesses, ou un différentiel de train de véhicule automobile.

Cet ensemble 1 pourra être destiné à être accouplée à une boîte de vitesses appartenant à une chaîne de traction de véhicule automobile. L'ensemble 1 est alors apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine 10 pourra être comprise entre 4kW et 50kW. Alternativement, la machine électrique 10 pourra être implantée sur un essieu du véhicule automobile, notamment un essieu arrière.

Dans l'exemple considéré, la machine électrique 10 présente avantageusement une tension de fonctionnement inférieure à 60 Volts, et valant de préférence 48 Volts. Typiquement, le couple fourni par la machine électrique est compris entre 30N.m et 150N.m.

La machine électrique tournante 10 est avantageusement de type réversible, c'est-à-dire qu'elle est apte à fonctionner dans un mode moteur pour appliquer un couple moteur aux roues à partir de l'énergie électrique de la batterie, et dans un mode générateur pour recharger une batterie à partir d'une puissance mécanique prélevée aux roues.

Plus précisément, le rotor 12 comporte un corps 12a sous la forme d'un paquet de tôles pour diminuer les courants de Foucault. Des aimants permanents sont implantés dans des ouvertures du corps 12a. Les aimants peuvent être implantés suivant une configuration en V. Alternativement, les aimants sont implantés radialement à l'intérieur des cavités, les faces en vis-à-vis de deux aimants adjacents étant de même polarité. Il s'agit alors d'une configuration à concentration de flux. Les aimants pourront être en terre rare ou en ferrite selon les applications et la puissance recherchée de la machine 10. En variante, le rotor peut comprendre uniquement des aimants permanents pour créer un flux magnétique et ne pas être excité extérieurement. Alternativement, les pôles du rotor 12 pourront être formés par des bobines.

En outre, le rotor 12 comporte deux flasques 22 plaqués chacun contre une face d'extrémité axiale du rotor 12. Ces flasques 22 assurent une retenue axiale des aimants à l'intérieur des cavités et servent également à équilibrer le rotor 12. Un ressort pourra également être inséré à l'intérieur de chaque cavité afin de maintenir radialement les aimants à l'intérieur des cavités.

Par ailleurs, le stator 11 comporte un corps 11 a constitué par un paquet de tôles ainsi qu'un bobinage 21. Le corps 11 a est formé par un empilement de feuilles de tôles indépendantes les unes des autres et maintenues sous forme de paquet au moyen d'un système de fixation adapté. Le paquet de tôles est doté d'encoches, par exemple du type semi-fermées, équipées d'isolant d'encoches pour le montage du bobinage 21 du stator 11. Le corps 11a est muni de dents délimitant deux à deux des encoches pour le montage du bobinage 21 du stator 11.

Le bobinage 21 comporte une pluralité d'entrées/sorties de phase 48 traversant les encoches du corps 11a du stator et formant des chignons 25 s'étendant en saillie de part et d'autre du corps 11a du stator 11. Les entrées et sorties de phase 48 comprennent chacune deux extrémités et sont obtenues ici à partir d'éléments conducteurs en forme d'épingles reliées entre elles par exemple par soudage. Ces enroulements sont par exemple des enroulements triphasés connectés en étoile ou en triangle.

Dans l'exemple considéré, ces phases 48 sont reliées à l'onduleur 30 par l'intermédiaire d'un interconnecteur 20. L'onduleur permet l'alimentation en un système de courant polyphasé du stator 11.

L'interconnecteur 20 est fixé sur une face du palier arrière 18 tournée vers l'extérieur de la machine électrique 10. L'interconnecteur 20 comporte donc une première face 20a orientée en direction opposée de la machine électrique 10 et une deuxième face 20b, opposée à ladite première face 20a et orientée vers le palier arrière 18. Il sera possible de prévoir des moyens d'indexage pour garantir un positionnement correct de l'interconnecteur 20 par rapport au palier 18, notamment pour garantir la pluralité d'entrées/sorties de phase 48.

Les moyens de fixation de l'interconnecteur 20 sur le palier 18 (non visibles sur les figures) pourront consister en des organes de fixation, tels que des vis, traversant des trous de fixation ménagés dans l'interconnecteur et situés en coïncidence de trous taraudés réalisés dans le palier arrière 18.

L'interconnecteur 20 comprend des traces B+ et B- (non visibles sur les figures) qui sont surmoulées notamment dans un corps de surmoulage 53. Le corps 53 est réalisé avantageusement dans un matériau isolant, notamment en plastique. Le corps 53 présente une forme annulaire sensiblement coaxiale avec l'arbre 13.

Comme on peut le voir sur les figures 3 et 4, l'onduleur 30 est relié électriquement à la machine électrique 10 par l'intermédiaire de l'interconnecteur 20. L'onduleur 30 comporte une pluralité de modules de puissance 31 et un module électronique de contrôle 50 de la pluralité de modules de puissance 31.

Dans l'exemple considéré, l'onduleur 30 comprend trois modules de puissance 31, ces derniers étant reliés aux phases 48 du bobinage 21 du stator. Dans le cadre de la présente invention, les modules de puissance 31 sont fixés sur la première face 20a de l'interconnecteur perpendiculairement à cette dernière. Chaque module de puissance comprend une première extrémité 34, également appelé extrémité avant, qui fait face à la première face 20a de l'interconnecteur 20 sur laquelle il est fixée et une deuxième extrémité 35, également appelé extrémité arrière, opposée à la première extrémité et exempt de toute connexion électrique. Chaque module de puissance 31 s'étend donc entre sa première et deuxième extrémité 34, 35 dans un plan perpendiculaire au plan dans lequel se trouve l'interconnecteur 20.

Les modules de puissance 31 sont tous concentrés sur une portion angulaire α de l'interconnecteur 20, ladite portion prédéfinie α étant inférieure à 360°, de préférence inférieure à 220°.

En outre, l'interconnecteur 20 présente une portion angulaire préfinie β apte à recevoir ledit module électronique de contrôle 50, ladite portion angulaire β étant égale à 360°-a. Le module électronique de contrôle véhicule les signaux de commande basse tension, tels que des signaux relatifs à la position angulaire du rotor issus par exemple d'un capteur à effet Hall ou de signaux de température issus par exemple d'un capteur intégré au stator de la machine électrique 10. Les composants de contrôle étant connus de l'homme du métier, ils ne sont pas décrits en détail dans la suite de la description

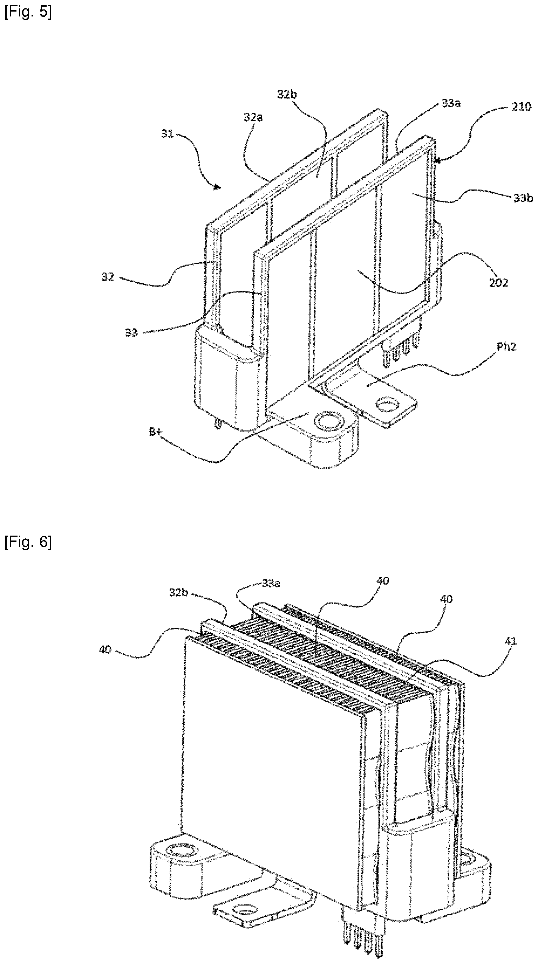

Tel qu'illustré sur les figures 4 et 5, chaque module de puissance 31 comporte :
- une première paroi 32 ayant une première et une deuxième face latérale 32a, 32b ;
- une deuxième paroi 33 ayant une première et une deuxième face latérale 33a, 33b ;
- un support conducteur 210 intégrant quatre traces de puissance, à savoir une trace B+, une trace B- et deux traces de phase Ph1, Ph2 ;
- une pluralité d'interrupteurs électroniques de puissance 202 montés sur des traces de puissance apparentes ; et
- un circuit de contrôle intégrant des composants de signal intégré au support.

Avantageusement, chaque module de puissance 31 comprend deux parois 32, 33, chacune ayant une première et une deuxième face latérale 32a, 32b, 33a, 33b. Avantageusement, les deux parois 32, 33 d'un même module de puissance sont parallèles l'une par rapport à l'autre.

Les interrupteurs électroniques de puissance 202 et les composants de signal sont montés sur le support conducteur 210. Les interrupteurs électroniques sont dans un exemple non limitatif des transistors de type MOFSET à faible résistance thermique et de préférence à base de nitrure de gallium (GaN).

Dans l'exemple illustré, le module de puissance 31 comporte 4 orifices de fixation qui reçoivent les moyens de fixation 36, qui sont dans un exemple non limitatif des vis de fixation.

On notera que les vis de fixation 36 permettent non seulement d'effectuer la tenue mécanique des modules de puissance 31 sur l'interconnecteur 20 mais également d'effectuer une connexion électrique entre les modules de puissance 31 et l'interconnecteur 20.

Dans l'exemple considéré, la pluralité de modules de puissance 31 est répartie en trois groupes 31a, 31b, 31c, chaque groupe étant fixé sur la première face 21 de l'interconnecteur 20 indépendamment des autres groupes. Chaque module de puissance 31 peut être ainsi monté et démonté facilement de l'interconnecteur 20 sur lequel il est fixé via les vis de fixations 36. Il est ainsi possible de démonter un ou plusieurs modules de puissance 31 défectueux sans détériorer le reste de l'onduleur 30 ou de la machine électrique tournante 10.

On notera par ailleurs, que l'on a remplacé les soudures de phases généralement présentes dans l'état de la technique antérieure par des moyens mécaniques qui remplissent une fonction de connexion électronique puisqu'il n'est plus nécessaire d'avoir des accès spécifiques auxdites phases pour réaliser une soudure.

Ainsi, dans un mode de réalisation non limitatif, l'ensemble 1 peut comporter autant de modules de puissance 31 que nécessaire (deux phases par module au maximum) afin de réaliser une machine à trois, cinq, six ou sept phases. Plusieurs modules de puissance 31 pouvant être regroupé dans un groupe 31a, 31b, 31c. Il est possible par exemple d'avoir trois groupes comprenant chacun deux modules de puissance 31.

Dans un mode de réalisation non limitatif illustré sur la figure 5, chaque module de puissance 31 peut comporter une céramique comprenant les composants de commande (driver) des interrupteurs électroniques et les composants de signal. Les interrupteurs électroniques sont reportés sur le support conducteur par brasure et liaison filaire (« wire bonding »). Dans ce cas, les modules de puissance 31 comportent en outre un contour en matériau plastique qui permet la tenue mécanique de l'ensemble des éléments du module de puissance entre eux. Dans des modes de réalisation non limitatifs, le matériau plastique du contour est du PEEK (polyétheréthercétone) ou du PPA (polyphtalamide). Ces plastiques sont des plastiques haut de gamme très performants qui peuvent être utilisés à de fortes températures, par exemple aux alentours de 350°C, ce qui est intéressant lors de la brasure des interrupteurs électroniques sur le support conducteur.

En variante, on peut utiliser une technologie dite « copper in lay » pour les modules de puissance 31.

En fonctionnement, la température des modules de puissance 31 s'élève ainsi que la température au niveau des parties actives que sont le stator et le rotor. Le refroidissement de la machine est nécessaire à son bon fonctionnement. A cet effet, la machine électrique 10 comporte des moyens générateurs d'un flux forcé d'un fluide de refroidissement 14 s'écoulant dans la direction axiale de la machine comme on peut le voir sur la figure 1. Dans l'exemple considéré les moyens générateurs de flux 14 consistent en un ventilateur arrière fixé sur le rotor 12 ou sur l'arbre 13 qui assure une aspiration de l'air à travers l'ensemble 1.

En outre, comme on peut le voir sur les figures 3, 4 et 6, à chaque face latérale 32a, 32b, 33a, 33b d'un module de puissance est associé un dissipateur thermique 40 pour évacuer une chaleur du module de puissance. Un même dissipateur thermique 40 peut être associé à deux faces latérales, il suffira simplement d'adapter sa taille. Dans l'exemple considéré le dissipateur thermique 40 associé aux faces 32b et 33a est deux fois plus grand que les dissipateurs 40 associés à une seule face. Ainsi, les dissipateurs 40 étant solidaires des modules de puissance 31 et non solidaires du palier arrière 18, le refroidissement de l'onduleur est garanti quelle que soit la chaleur produite par le palier arrière 18. L'ensemble 1 permet de réaliser un découplage thermique entre le palier arrière 18 et l'onduleur 30 de sorte que la chaleur ne peut pas se propager par conduction.

De préférence, chaque module de puissance 31 comprend deux parois 32, 33, chacune ayant une première et une deuxième face latérale 32a, 32b, 33a, 33b et trois dissipateurs thermique 40. Un premier dissipateur 40 est associé à la première face 32a de la première paroi 32, un deuxième dissipateur est associé à la deuxième face 33b de la deuxième paroi 33 et un troisième dissipateur est associé aux deux faces latérales 32b, 33a.

De préférence, chaque dissipateur 40 est réalisé dans un matériau métallique, tel que l'aluminium. Chaque dissipateur 40 comporte des ailettes de refroidissement 41 qui s'étendent perpendiculairement à l'interconnecteur 20. Les ailettes 41 s'étendent ainsi axialement par rapport à l'axe de rotation X de la machine électrique 10 entre leur première extrémité 34 et leur deuxième extrémité 35. De préférence, les ailettes 41 s'étendent sur l'intégralité des faces latérales des modules de puissance 31. Les ailettes 41 ont avantageusement une forme de rubans et sont ondulés, du type sinusoïdal, ce qui permet ainsi d'augmenter la surface d'échange thermique avec l'air sans pour autant augmenter de façon gênante l'encombrement du dissipateur 40.

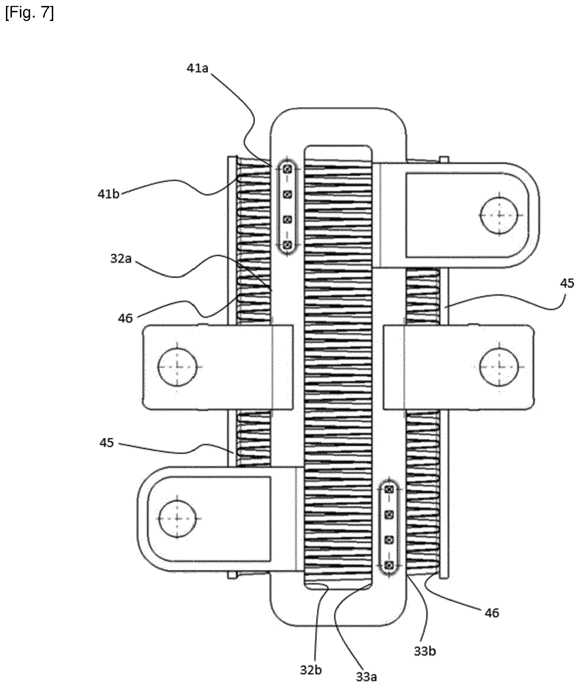

Comme on le voit plus clairement sur la figure 7, chacun des dissipateurs 40 comporte des ailettes 41 qui délimitent une alternance d'arches opposées 41a, 41b, ces arches ayant sensiblement la même hauteur.

Une première série d'arches 41a est en effet relié à une face latérale 32a, 32b, 33a, 33b d'un module de puissance 31 et une seconde série d'arches 41 b opposées aux arches 41a de la première série et intercalées entre ces arches 41a est relié à une face opposée.

Dans l'exemple considéré, une première série d'arche 41a est reliée à la face latérale 32b, la deuxième série d'arches 41b est reliée à la face latérale opposée 33a (ou inversement).

Deux autres premières séries d'arches 41a sont reliées aux faces latérales 32a et 33b tandis que les deux autres deuxièmes séries d'arches 41b sont reliées à des faces opposées 46 de deux plaques métalliques 45.

Les deux faces entre lesquelles est fixé un dissipateur 40, à savoir 46 et 32a, 32b et 33a, 33b et 46 sont sensiblement parallèles entre elles et matérialisent deux plans parallèles de contact affleurant avec les sommets des arches 41a, 41b.

De préférence, le dissipateur thermique 40 est fixé sur chaque paroi latérale du module de puissance 31 par pression par l'intermédiaire d'un matériau de contact ayant une bonne conductivité thermique. Le matériau de contact est déformable au moment de l'assemblage afin qu'il s'accroche aux deux surfaces à mettre en contact, à savoir celle du module de puissance d'une part et celle du dissipateur thermique d'autre part. Ce matériau peut également compenser les éventuelles irrégularités qui pourraient être présentes, par exemple, des bavures ou des particules électriquement conductrices qui se trouvent entre les deux surfaces qui entrent en contact lors de l'assemblage.

Il est essentiel qu'il y ait un excellent contact thermique uniforme au moins sur toute la zone de contact entre le module de puissance et le dissipateur. On utilise de préférence une pâte plastiquement déformable, par exemple dite de remplissage d'espacement, qui présente en outre l'avantage d'avoir de bonnes propriétés d'isolation électrique, comme matériau de contact.

En variante, le dissipateur 40 peut être soudé sur le module de puissance 31 avec ou sans apport de matière. Un exemple de soudage sans apport de matière est le soudage par ultrasons et avec apport de matière peut être un brassage.

Les ailettes 41 forment des canaux orientés axialement dans lesquels passe le flux de fluide de refroidissement axial entrainant un refroidissement par convection des modules de puissance 31.

Comme cela est visible sur les figures 1 et 3, l'onduleur 30 comprend un capot de protection 37 comprenant des ouvertures 71, l'interconnecteur 20 comprend des ouvertures 72 et le palier arrière 18 comprend des ouvertures 73. Les ouvertures 71, 72, 73 s'étendent perpendiculairement à l'axe X et sont sensiblement alignées les unes avec les autres pour le passage du flux de fluide de refroidissement axial.

De cette façon, le fluide de refroidissement, en particulier l'air, généré par les moyens générateurs d'un flux forcé 14 est introduit dans l'arrière de la machine électrique 10 au niveau des ouvertures 71 puis circule dans les canaux orientés axialement formés par les ailettes 41 refroidissant les modules de puissance 31 avant de traverser les ouvertures 72, 73. Dans l'exemple considéré, le fluide s'évacue par des ouïes réalisées dans le palier arrière 18.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Ensemble (1), notamment pour véhicule hybride comprenant :
- une machine électrique tournante (10) comportant :
▪ des moyens générateurs d'un flux forcé d'un fluide de refroidissement (14) s'écoulant dans la direction axiale de la machine,
▪ un rotor (12) centré et fixé sur un arbre de rotation (13) s'étendant suivant un axe (X),
▪ un stator (11) entourant le rotor et muni d'un corps et d'au moins un bobinage (21) comportant une pluralité d'entrées/sorties de phase (48) et
▪ un palier arrière (18) monté à une extrémité du rotor (12) et recevant l'arbre (13),
- un onduleur (30) relié électriquement à la machine électrique tournante (10) comportant :
▪ une pluralité de modules de puissance (31), chaque module de puissance (31) comprenant une paroi (32, 33) avec une première et une deuxième face latérale (32a, 32b, 33a, 33b),
▪ un dissipateur thermique (40) comportant des ailettes (41) associé à chacune desdites face latérales (32a, 33a, 32b, 33b), et
▪ un module électronique de contrôle (50) de la pluralité de modules de puissance (31),
- un interconnecteur (20) configuré pour relier les phases (48) du bobinage du stator à la pluralité de modules de puissance (31) et pour relier ces derniers au module électronique de contrôle (50), l'interconnecteur (20) comportant d'une part une première face (20a) sur laquelle est fixé perpendiculairement par rapport à cette dernière la pluralité de modules de puissance (31) et d'autre part une seconde face (20b), opposée à ladite première face et orientée vers le palier arrière (18),
**caractérisé en ce que** les modules de puissance (31) sont tous concentrés sur une portion angulaire (a) de l'interconnecteur (20), ladite portion prédéfinie (a) étant inférieure à 360°, de préférence inférieure à 220°.

2. Ensemble (1) selon la revendication 1, **caractérisé en ce que** la première face (20a) de l'interconnecteur (20) présente une portion angulaire préfinie (β) apte à recevoir ledit module électronique de contrôle (50), ladite portion angulaire (β) étant égale à 360°-a.

3. Ensemble (1) selon l'une quelconque des revendications précédentes, **caractérisé en ce que** la pluralité de modules de puissance (31) est répartie en au moins deux groupes (31a, 31b, 31c), chaque groupe étant fixé sur la première face (20a) de l'interconnecteur (20) indépendamment des autres groupes.

4. Ensemble (1) selon l'une quelconque des revendications précédentes, **caractérisé en ce que** chaque module de puissance (31) comprend une première extrémité (34) qui fait face à la première face (20a) de l'interconnecteur (20) sur laquelle il est fixé et une deuxième extrémité (35) opposé à ladite première extrémité (34), ladite deuxième extrémité (35) étant exempte de toute connexion.

5. Ensemble (1) selon l'une quelconque des revendications précédentes, **caractérisé en ce que** la pluralité de modules de puissance (31) est fixée sur la première face (20a) de l'interconnecteur (20) par l'intermédiaire de moyens de fixations (36) qui servent également à la connexion électrique entre les modules de puissance (31) et l'interconnecteur (20).

6. Ensemble (1) selon l'une quelconque des revendications précédentes, **caractérisé en ce que** l'interconnecteur (20) comprend des traces B+ et B- surmoulées.

7. Ensemble (1) selon la revendication précédente, **caractérisé en ce que** la pluralité de modules de puissance (31) est connectée aux traces B+ et/ou B- par la première face (20a) de l'interconnecteur (20).

8. Ensemble (1) selon l'une quelconque des revendications précédentes, **caractérisé en ce que** les ailettes (41) forment des canaux orientés axialement dans lesquels passe le flux de fluide de refroidissement axial.

9. Ensemble (1) selon l'une quelconque des revendications précédentes, **caractérisé en ce que** l'interconnecteur (20) comprend des ouvertures (72) qui s'étendent perpendiculairement à l'axe (X) pour le passage du flux de fluide de refroidissement axial.

10. Ensemble (1) selon la revendication précédente, **caractérisé en ce que** le palier arrière (11) comprend des ouvertures (73) qui s'étendent perpendiculairement à l'axe (X) pour le passage du flux de fluide de refroidissement axial, lesdites ouvertures (73) étant sensiblement alignées avec les ouvertures (72) de l'interconnecteur (20).
